# EUROPEAN PATENT SPECIFICATION

(11) **EP 2 403 181 B1**
(45) Date of publication and mention of the grant of the patent: **17.07.2013**
(21) Application number: 11166613.7
(22) Date of filing: 18.05.2011
(51) Int. Cl.: H04W 4/00, H04L 12/18, H04L 29/08, H04L 29/06

(54) **Method for automatically setting language types of push-based services, client, and server thereof**
Verfahren zur automatischen Einstellung der Sprachtypen von Push-basierten Diensten, Client und Server dafür
Procédé de paramétrage automatique de langues de services à base de poussoir, client et serveur associé

(30) Priority: 30.06.2010 TW 099121423
(43) Date of publication of application: 04.01.2012
(73) Proprietor: HTC Corporation, Taoyuan County 330 (TW)
(72) Inventor: Chen, Hsi-Kun, Taoyuan City Taoyuan County 330 (TW); Chang, Jen-Chih, Taoyuan City Taoyuan County 330 (TW)
(74) Representative: 2K Patentanwälte Blasberg Kewitz & Reichel

(56) References cited:
- US-A1- 2005 078 644
- US-A1- 2006 206 310
- US-A1- 2008 097 746
- US-A1- 2009 181 649

## Description

### Background of the Invention

### 1. Field of the Invention

The present invention relates to a method and a device utilizing push-based services, and more particularly, to a method, a client, and a server for automatically setting language types of push-based services.

### 2. Description of the Prior Art

Visitors usually travel around with portable devices (such as, a notebook computer, a mobile phone, or a PDA) carried. Many places, including international airports, museums, attractions, or hotels, etc., where Internet or push-based services may be provided to allow passengers to be able to easily obtain weather or travel information. Such push-based services may include several language types. One of the current usages is to require users to first choose an appropriate language version of the push-based service in order to continue to use the push-based service. Another current usage is that: the server directly provides the push-based service corresponding to the default language version (e.g., English) to the user. However, such usages are inconvenient to the user who is not familiar with foreign languages.

Hence, how to improve the convenience of the portable devices (such as, a notebook, a mobile phone, or a PDA) and how to improve additional features to the portable devices have become one of the important topics in this field.
US 2009/181649 A1 relates to delivery and/or presentation of electronic data to a mobile electronic device in accordance with a dynamic user profile. In one embodiment, as the user profile changes, the electronic data being delivered to and/or presented on the mobile electronic device can dynamically change. In other words, the electronic data being delivered and/or presented can be selected, customized or targeted for characteristics of the dynamic user profile.
US 2008/097746 A1 relates to a server device which can provide a client device with information in a plurality of languages. The server device includes a supportable language recognizing unit recognizing a plurality of supportable languages using language identification information, a requested language recognizing unit recognizing a requested language desired by the client device using the language identification information, an attribute information acquiring unit acquiring attribute information associated with the language identification information, and a language selecting unit selecting one supportable language from the plurality of supportable languages as a support language in which information is provided to the client device, using the attribute information when the language identification information of the requested language does not match with that of any supportable language.
US 2005/078644 A1 relates to techniques and structures for providing service related information to wireless users within a wireless network.
US 2006/206310 A1 relates to an improved system and method for peer-to-peer communications. In one example, the method provides for natural language processing of communications between two endpoints in a peer-to-peer hybrid communications network.

### Summary of the Invention

It is one of the objectives of the present invention to provide a method for automatically setting language types of push-based services, a client, and a server to solve the abovementioned problems.

According to one embodiment, a method, applied to a client, for automatically setting language types of push-based services, as defined in claim 1, is provided.

According to another embodiment, a client for automatically setting language types of push-based services, as defined in claim 4, is provided.

According to still another embodiment, a method, applied to a server, for automatically setting language types of push-based services, as defined in claim 9, is provided.

According to still another embodiment, a server, as defined in claim 10, is provided.

It is one of the objectives of the present invention to provide a client being able to automatically set language types of push-based services without pre-selecting the desired language by the user, so as to bring more convenience to the user.

These and other objectives of the present invention will no doubt become obvious to those of ordinary skill in the art after reading the following detailed description of the preferred embodiment that is illustrated in the various figures and drawings.

### Brief Description of the Drawings

FIG.1 is an organization chart of a network system.

FIG.2 is a block diagram of a client for automatically setting language types of push-based services according to an embodiment of the present invention.

FIG. 3 is a block diagram of a server according to an embodiment of the present invention.

FIG.4 is a diagram illustrating a method for automatically setting language types of push-based services according to an embodiment of the present invention.

FIG.5 is a block diagram of a client for automatically setting language types of push-based services according to another embodiment of the present invention.

FIG.6 is a block diagram of a server according to another embodiment of the present invention.

FIG.7 is a diagram illustrating a method for automatically setting language types of push-based services according to another embodiment of the present invention.

FIG.8 is a flowchart illustrating a method for automatically setting language types of push-based services according to an exemplary embodiment of the present invention.

FIG.9 is a flowchart illustrating a method for automatically setting language types of push-based services according to another exemplary embodiment of the present invention.

FIG.10 is a flowchart illustrating a method for automatically setting language types of push-based services according to still another exemplary embodiment of the present invention.

FIG.11 is a flowchart illustrating a method for automatically setting language types of push-based services according to still another exemplary embodiment of the present invention.

### Detailed Description

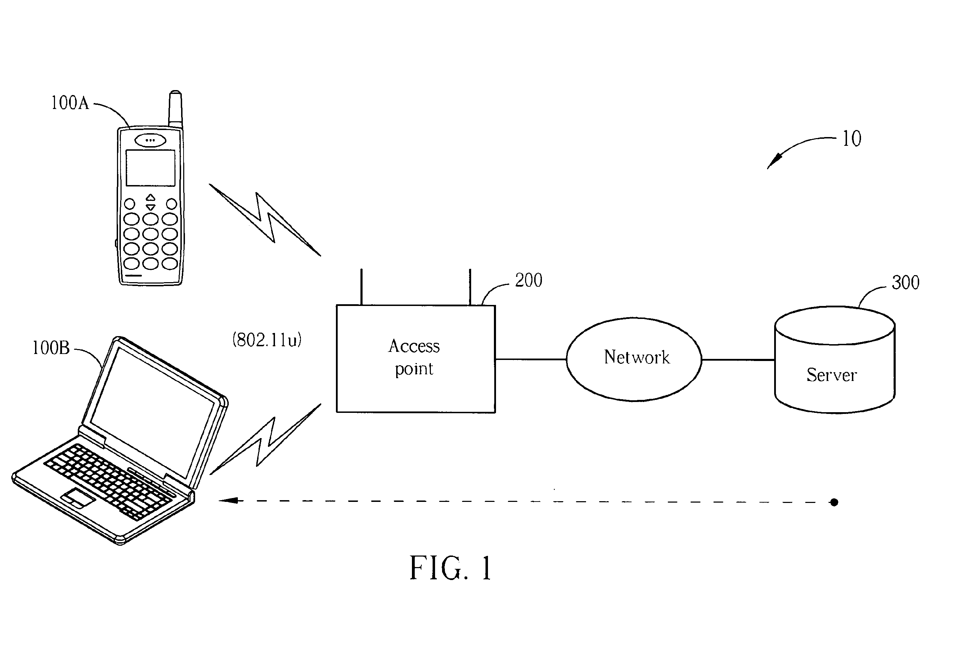

Please refer to FIG.1, which is an organization chart of a network system 10. In this embodiment, the network system 10 is implemented by a wireless system based on an IEEE802.11u protocol. However, this is not meant to be a limitation of the present invention, and any network system equipped with push-based services could belong to the scope of the present invention, such as, a system based on a short message service (SMS) protocol or a wireless application protocol (WAP) protocol. As shown in FIG.1, the network system 10 includes, but is not limited to, one or more clients 100A and 100B, an access point 200, and a server 300. When the client 100A and/or the client 100B is located in the range of the access point 200, the access point 200 can transmit a beacon signal indicating a push-based service to the client 100A and/or the client 100B. At this time, the server 300 is able to automatically transmit a push-based service information of the push-based service to the client 100A and/or the client 100B without user's operations upon the client 100A and/or the client 100B.

Please note that, the abovementioned client 100A and/or the client 100B may be a portable device, such as a notebook, a mobile phone, a personal digital assistant (PDA), a PDA phone, a smart phone, an e-book, a game device, or a music player. But the present invention is not limited to this only, and it can be any type of portable devices. In addition, the abovementioned push-based service may conform to one of an 802.11u protocol, a short message service (SMS) protocol, and a wireless application protocol (WAP). The push-based service may include information such as advertisements, travel information, weather, constellations, or numerology services, but this in not meant to be limitations of the present invention.

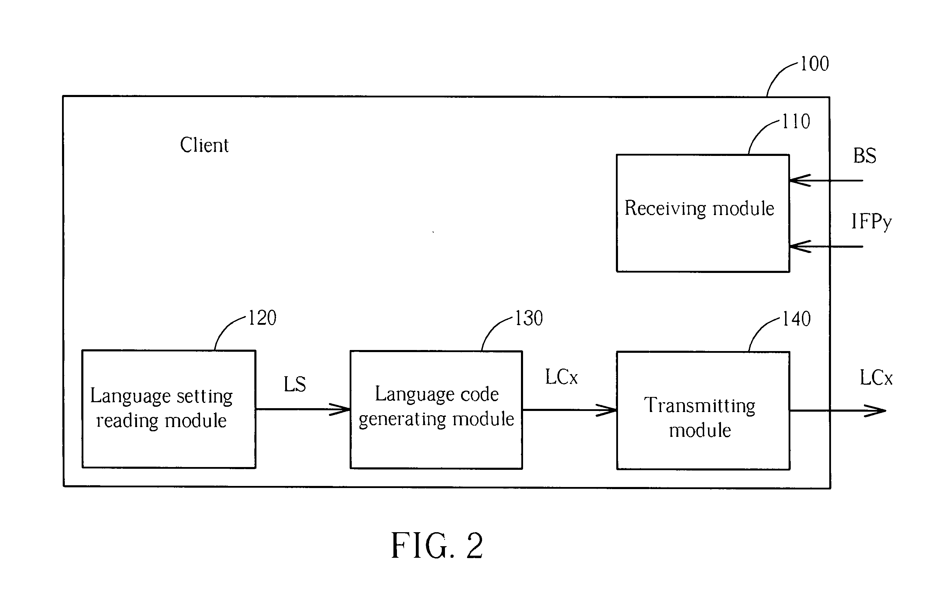

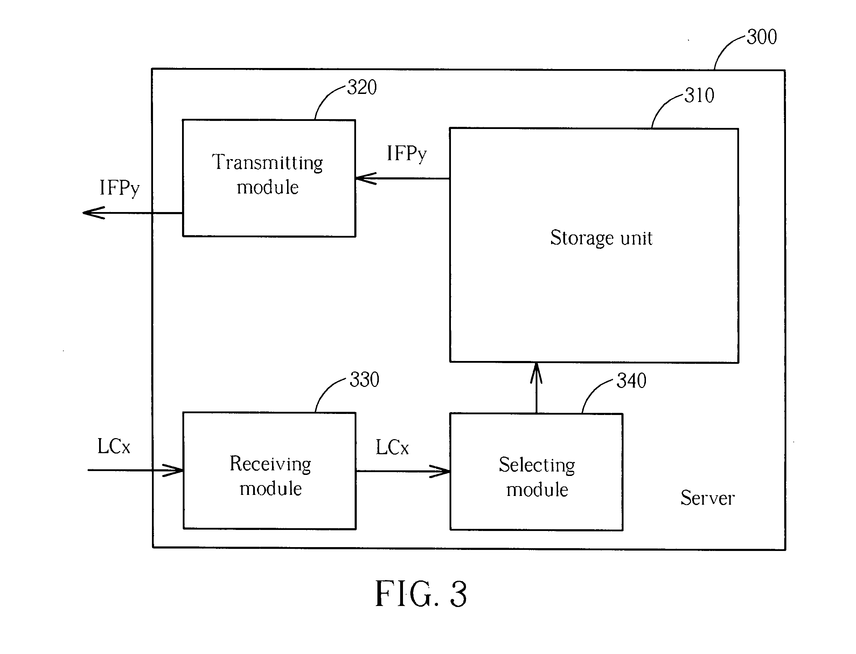

Please refer to FIG.1, FIG.2 together with FIG.3. FIG.2 is a block diagram of a client 100 (e.g., the client 100A or the client 100B shown in FIG.1) for automatically setting language types of push-based services according to an embodiment of the present invention, and FIG.3 is a block diagram of a server 300 according to an embodiment of the present invention. As shown in FIG.2, the client 100 includes, but is not limited to, a receiving module 110, a language setting reading module 120, a language code generating module 130, and a transmitting module 140. The receiving module 110 is arranged for receiving a beacon signal BS, wherein the beacon signal BS indicates a push-based service. The language setting reading module 120 is arranged for reading a language setting LS of the client 100. Be noted that the language setting LS can be a display language of the client 100 set by a user. For example, the user can set the display language of the client 100 as "Chinese", and the language setting reading module 120 reads this setting and thereby sets "Chinese" as the language setting LS. The language code generating module 130 is arranged for generating a language code LCx according to the language setting LS. For example, when the display language of the client is set as "English", the language code generating module 130 generates a language code LC1 corresponding to "English"; when the display language of the client 100 is set as "Chinese", the language code generating module 130 generates a language code LC2 corresponding to "Chinese"; when the display language of the client 100 is set as "Japanese", the language code generating module 130 generates a language code LC3 corresponding to "Japanese"; and so on. Finally, the transmitting module 140 transmits the language code LCx to the server 300.

Please note that, the abovementioned language code may conform to one of a universal resource locator (URL) definition, an ISO 639 language coding definition, and a Unicode definition, but the present invention is not limited to this only. Those skilled in the art should appreciate that various modifications to the language code may be made without departing from the spirit of the present invention, which also belongs to the scope of the present invention.

As shown in FIG.3, the server 300 includes, but is not limited to, a storage unit 310, a transmitting module 320, a receiving module 330, and a selecting module 340. The storage unit 310 is used for storing a plurality of push-based service information IFP1~IFPm of a push-based service, wherein the plurality of push-based service information IFP1~IFPm correspond to a plurality of languages, respectively. For example, the storage unit 310 stores three push-based service information IFP1~IFP3, wherein IFP1 is the push-based service information related to "English", IFP2 is the push-based service information related to "Chinese", and IFP3 is the push-based service information related to "Japanese". Furthermore, the plurality of push-based service information IFP1~IFPm includes a default push-based service information corresponding to a default language. For example, the default language is "English", and thereby the default push-based service information corresponds to the push-based service information IFP1 related to English. The receiving module 330 receives the language code LCx from the client 100. After that, the selecting module 340 selects a push-based service information IFPy from the plurality of push-based service information IFP1~IFPm according to the language code LCx of the client 100. In this embodiment, the selecting module 340 determines whether the plurality of push-based service information IFP1~IFPm have the push-based service information corresponding to the language code LCx. When the selecting module 340 determines that the plurality of push-based service information IFP1~IFPm have the push-based service information corresponding to the language code LCx, the selecting module 340 selects the push-based service information corresponding to the language code LCx. When the selecting module 340 determines that the plurality of push-based service information IFP1~TFPm do not have the push-based service information corresponding to the language code LCx, the selecting module 340 selects the default push-based service information. Finally, the transmitting module 320 transmits the push-based service information IFPy selected by the selecting module 340 to the client 100. As an illustration, if the receiving module 330 receives the language code LC2 corresponding to "Chinese" from the client 100, the selecting module 340 can know that the language setting LS of the client 100 is "Chinese" by reference to the language code LC2, and then determines that the push-based service information IFP1~IFP3 have the push-based service information IFP2 corresponding to "Chinese", such that the selecting module 340 selects the push-based service information IFP2. After that, the transmitting module 320 transmits the push-based service information IFP2 to the client 100. As another illustration, if the receiving module 330 receives the language code LC4 corresponding to "French" from the client 100, the selecting module 340 can know that the language setting LS of the client 100 is "French" by reference to the language code LC4, and then determines that the push-based service information IFP1~IFP3 do not have the push-based service information corresponding to "French", such that the selecting module 340 selects the default push-based service information IFP1 corresponding to the default language "English". After that, the transmitting module 320 transmits the push-based service information IFP1 to the client 100.

Please refer to FIG.2 again. After the server 300 sends out the push-based service information IFPy, the receiving module 110 of the client 100 can receive the push-based service information IFPy and generates an output (such as, images and/or voices) according to the push-based service information IFPy. For example, the push-based service information may be a travel information. If the receiving module 110 of the client 100 receives the push-based service information IFP1, the client 100 is able to play the travel information corresponding to English via a display and/or a speaker; if the receiving module 110 of the client 100 receives the push-based service information IFP2, the client is able to play the travel information corresponding to Chinese via a display and/or a speaker.

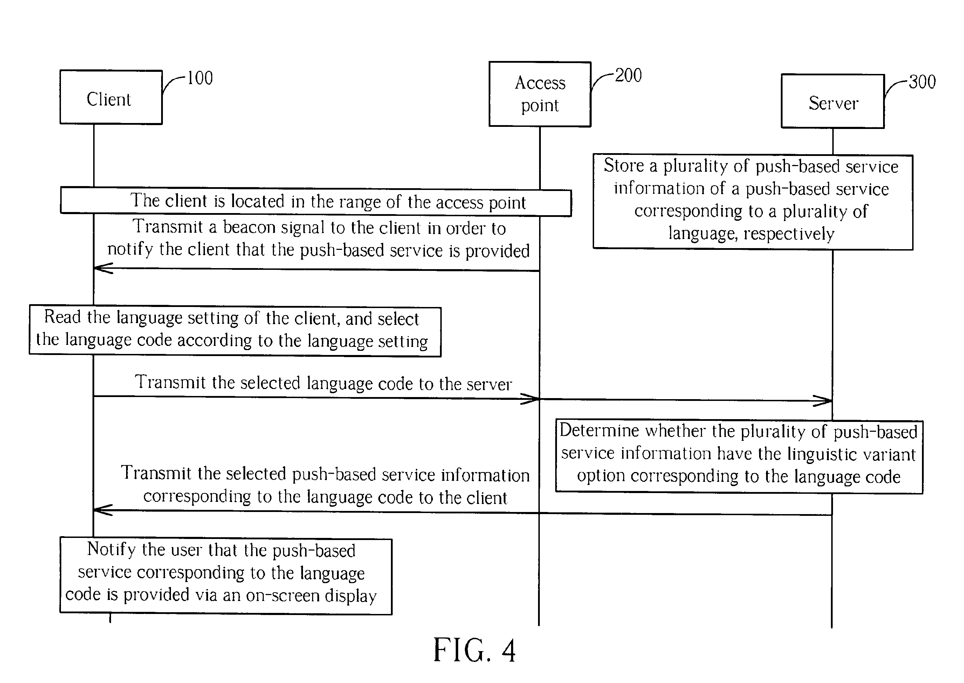

Please refer to FIG.2, FIG.3, together with FIG.4. FIG.4 is a diagram illustrating a method for automatically setting language types of push-based services according to an embodiment of the present invention. In this embodiment, the server 300 is equipped with functions of push-based services, such that the storage unit 310 of the server 300 stores a plurality of push-based service information IFP1~IFPm of a push-based service (such as, advertisements, weather, or travel information), wherein the plurality of push-based service information IFP1~IFPm correspond to a plurality of language, respectively. First, when the client 100 is located in the range of the access point 200, the access point 200 can transmit a beacon signal BS indicating a push-based service to the receiving module 110 of the client 100 in order to notify the client 100 that the push-based service is provided. At this time, the language setting reading module 120 reads the language setting LS of the client 100, and the language code generating module 130 generates the language code LCx according to the language setting LS. After that, the transmitting module 140 of the client 100 transmits the language code LCx generated by the language code generating module 130 to the server 300. The receiving module 330 of the server 300 receives the language code LCx of the client 100, and the selecting module 340 then determines whether the plurality of push-based service information IFP1~IFPm have the push-based service information corresponding to the language code LCx according to the language code LCx. When the selecting module 340 determines that the plurality of push-based service information IFP1~IFPm have the push-based service information corresponding to the language code LCx, the selecting module 340 selects the push-based service information corresponding to the language code LCx. When the selecting module 340 determines that the plurality of push-based service information IFP1~IFPm do not have the push-based service information corresponding to the language code LCx, the selecting module 340 selects the default push-based service information. After that, the transmitting module 320 of the server 300 transmits the push-based service information IFPy selected by the selecting module 340 to the client 100. Finally, the receiving module 110 of the client 100 receives the push-based service information IFPy, and generates an output according to the push-based service information IFPy. In other words, by adopting the client 100 and the server 300 disclosed in the present invention, the client is able to automatically set language types of push-based services without pre-selecting the desired language by a user, so as to bring more convenience to the user.

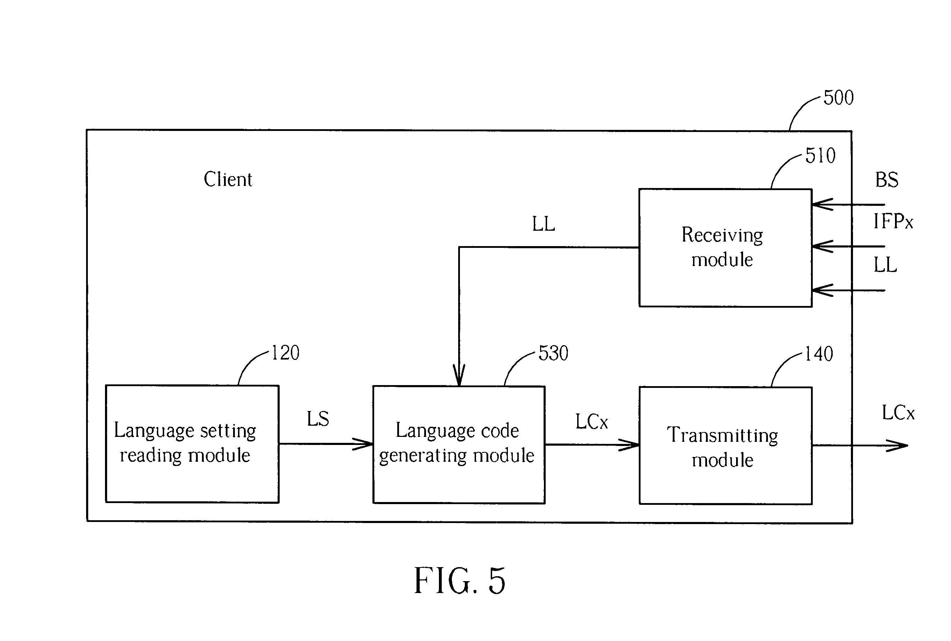

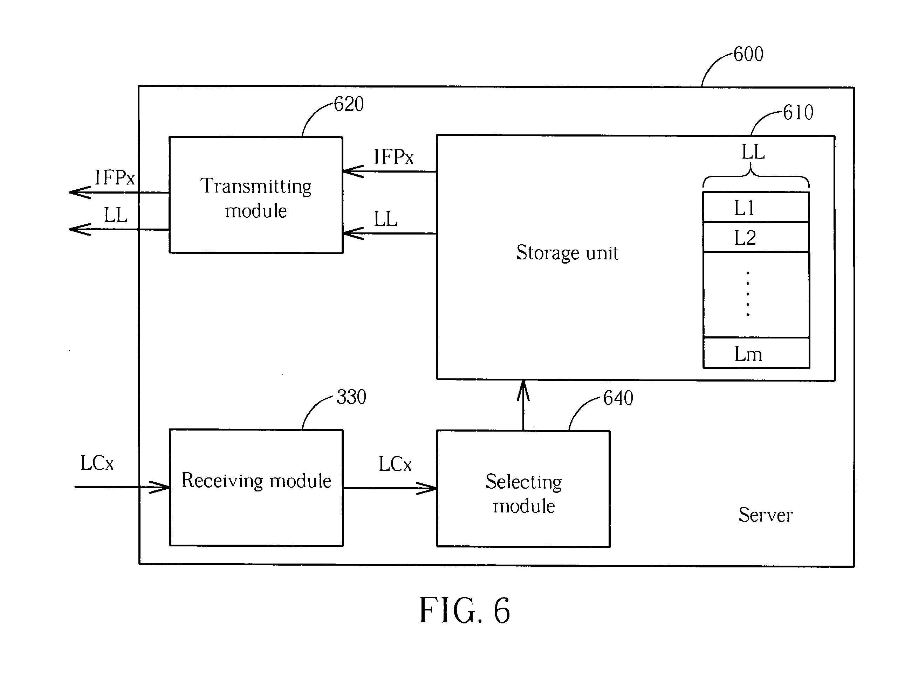

Please refer to FIG.5 together with FIG.6. FIG.5 is a block diagram of a client 500 for automatically setting language types of push-based services according to another embodiment of the present invention, and FIG.6 is a block diagram of a server 600 according to another embodiment of the present invention. In FIG.5, the architecture of the client 500 is similar to that of the client 100 shown in FIG.2, and the difference between them is that a receiving module 510 of the client 500 is further used for a language list LL corresponding to the push-based service from the server 600, wherein the language list LL has a plurality of linguistic variant options L1~Lm corresponding to the push-based service. In one embodiment, the language list LL has a default linguistic variant option. For example, the language list LL has three linguistic variant options L1, L2, and L3, being corresponding to "English", "Chinese", and "Japanese", respectively, wherein "English" is the default linguistic variant option. After the client 500 receives the beacon signal BS from the access point 200 and the language list LL from the server 600, a language code generating module 530 of the client 500 generates the language code LCx according to the language setting LS of the client 500 and the language list LL. In one embodiment, the language code generating module 530 first determines whether the language list LL has the linguistic variant option corresponding to the language setting LS according to the language setting LS of the client 500. When the language code generating module 530 determines that the language list LL has the linguistic variant option corresponding to the language setting LS, it generates the language code corresponding to the language setting LS. When the language code generating module 530 determines that the language list LL does not have the linguistic variant option corresponding to the language setting LS, it generates the language code corresponding to the default linguistic variant option. As an illustration, the language setting LS of the client 500 is set as "Chinese". Under this condition, after the language code generating module 530 determines that the language list LL has the linguistic variant option L2 corresponding to "Chinese", it accordingly generates the linguistic variant option L2 corresponding to "Chinese". As another illustration, the language setting LS of the client 500 is set as "French". Under this condition, after the language code generating module 530 determines that the language list LL only has the linguistic variant options L1, L2, and L3 and does not have the linguistic variant option corresponding to "French", it accordingly generates the default linguistic variant option L1 corresponding to the default language "English".

The architecture of the server 600 shown in FIG.6 is similar to that of the server 300 shown in FIG.3, and the difference between them is that: a storage unit 610 of the server 600 is further used for storing the language list LL corresponding to the push-based service, and the transmitting module 620 is further used for transmitting the language list LL to the client 500. Herein the language list LL has a plurality of linguistic variant options L1~Lm corresponding to the push-based service. In one embodiment, one of the plurality of linguistic variant options L1~Lm is set as a default linguistic variant option. After the receiving module 330 of the server 600 receives the language code LCx transmitted from the client 500, the selecting module 640 of the server 600 selects one push-based service information IFPx from the storage unit 610 according to the language code LCx. In more detail, the selecting module 640 selects the push-based service information IFPx corresponding to the language code LCx. For example, if the language code received by the receiving module 330 is the language code LC1 corresponding to English, therefore, the selecting module 640 selects the push-based service information IFP1 related to English according to the language code LC1. If the language code received by the receiving module 330 is the language code LC2 corresponding to Chinese, therefore, the selecting module 640 selects the push-based service information IFP2 related to Chinese according to the language code LC2. If the language code received by the receiving module 330 is the language code LC3 corresponding to Japanese, therefore, the selecting module 640 selects the push-based service information IFP3 related to Japanese according to the language code LC3. After that, the transmitting module 620 transmits the push-based information IFPx to the client 500.

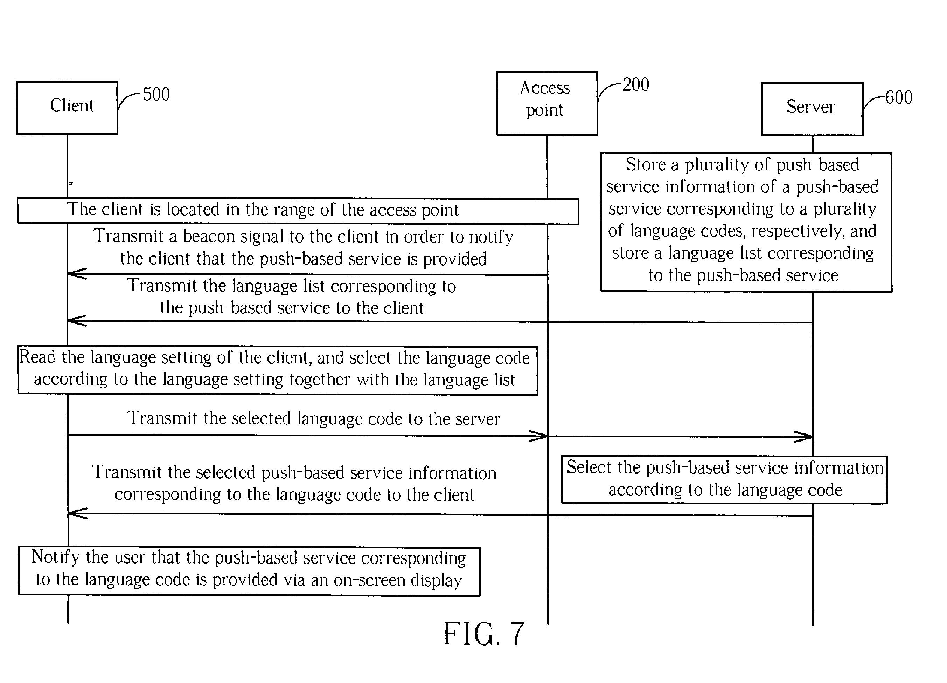

Please refer to FIG.5, FIG.6, together with FIG.7. FIG.7 is a diagram illustrating a method for automatically setting language types of push-based services according to another embodiment of the present invention. In this embodiment, the server 600 is equipped with functions of push-based services, such that the storage unit 610 of the server 600 stores a plurality of push-based service information IFP1~IFPm of a push-based service (such as, advertisements, weather, or travel information), wherein the plurality of push-based service information IFP1~IFPm correspond to a plurality of language, respectively. Moreover, the storage 610 further stores the language list LL corresponding to the push-based service. First, when the client 500 is located in the range of the access point 200, the access point 200 can transmit the beacon signal BS indicating a push-based service to the receiving module 510 of the client 500 in order to notify the client 500 that the push-based service is provided. After that, the transmitting module 620 of the server 600 transmits the language list LL to the receiving module 510 of the client 500, wherein the language list LL has a plurality of linguistic variant options L1~Lm corresponding to the push-based service, and one of the plurality of linguistic variant options L1~Lm is set as the default linguistic variant option. At this time, the language setting reading module 120 of the client 500 reads the language setting LS of the client 500, and the language code generating module 530 generates the language code LCx according to the language setting LS as well as the language list LL. For example, the language code generating module 530 determines whether the language list LL has the linguistic variant option corresponding to the language setting LS according to the language setting LS of the client 500. When the language code generating module 530 determines that the language list LL has the linguistic variant option corresponding to the language setting LS, it accordingly generates the language code corresponding to the language setting LS. When the language code generating module 530 determines that the language list LL does not have the linguistic variant option corresponding to the language setting LS, it accordingly generates the language code corresponding to the default linguistic variant option. After that, the transmitting module 140 of the client 500 transmits the generated language code LCx to the server 600 via the access point 200, and the selecting module 640 of the server 600 selects the push-based service information IFPx corresponding to the language code LCx from the storage 610 according to the language code LCx. After that, the transmitting module 620 of the server 600 transmits the push-based service information IFPx to the client 500. Finally, the receiving module 510 of the client 500 receives the push-based service information IFPx, and accordingly generates an output according to the push-based service information IFPx. In other words, by adopting the client 500 and the server 600 disclosed in the present invention, the client is able to automatically set the language types of push-based services without pre-selecting the desired language by a user, so as to bring more convenience to the user.

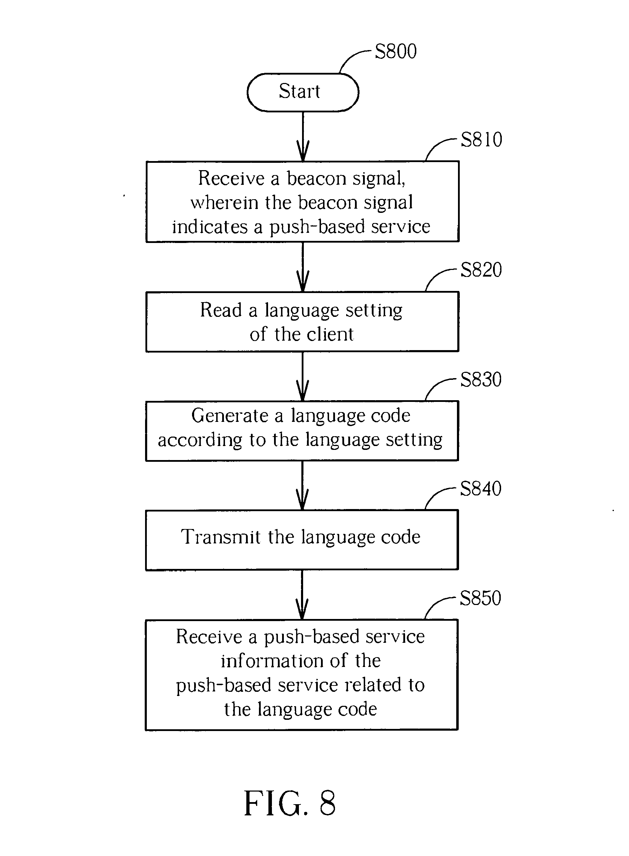

Please refer to FIG.8, which is a flowchart illustrating a method for automatically setting language types of push-based services according to an exemplary embodiment of the present invention. Please note that the following steps are not limited to be performed according to the exact sequence shown in FIG.8 if a roughly identical result can be obtained. The method includes, but is not limited to, the following steps:

Step S800: Start.

Step S810: Receive a beacon signal, wherein the beacon signal indicates a push-based service.

Step S820: Read a language setting of the client.

Step S830: Generate a language code according to the language setting.

Step S840: Transmit the language code.

Step S850: Receive a push-based service information of the push-based service related to the language code.

How each element operates can be known by collocating the steps shown in FIG.8 together with the elements of the client 100 shown in FIG.2 and the flow shown in FIG.4. Therefore, further description for the operations of the steps shown in FIG.8 is omitted here for brevity. For example, the steps S810 and S850 can be executed by the receiving module 110, the Step S820 can be executed by the language setting reading module 120, the Step S830 can be executed by the language code generating module 130, and the Step S840 can be executed by the transmitting module 140.

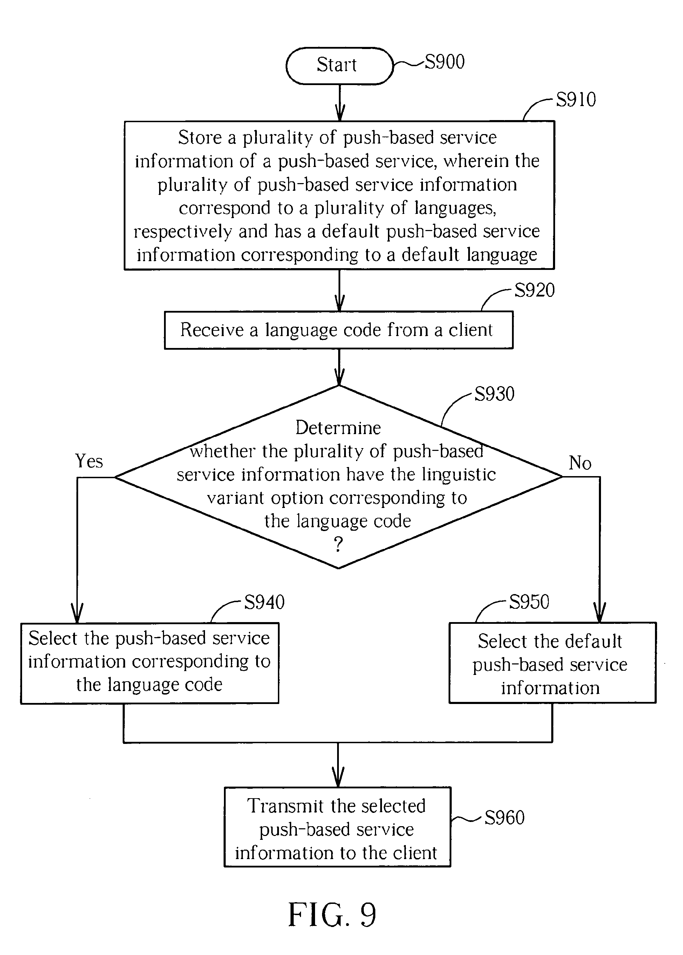

Please refer to FIG.9. FIG.9 is a flowchart illustrating a method for automatically setting language types of push-based services according to another exemplary embodiment of the present invention. The method includes, but is not limited to, the following steps:

Step S900: Start.

Step S910: Store a plurality of push-based service information of a push-based service, wherein the plurality of push-based service information correspond to a plurality of languages, respectively and has a default push-based service information corresponding to a default language.

Step S920: Receive a language code from a client.

Step S930: Determine whether the plurality of push-based service information have the linguistic variant option corresponding to the language code according to the language setting of the client. When determining that the plurality of push-based service information have the push-based service information corresponding to the language code, go to step S940; When determining that the plurality of push-based service information do not have the push-based service information corresponding to the language code, go to Step S950.

Step S940: Select the push-based service information corresponding to the language code.

Step S950: Select the default push-based service information.

Step S960: Transmit the selected push-based service information to the client.

How each element operates can be known by collocating the steps shown in FIG.9 together with the elements of the server 300 shown in FIG.3 and the flow shown in FIG.4. Therefore, further description for the operations of the steps shown in FIG.9 is omitted here for brevity. For example, the step S810 can be executed by the storage unit 310, the step S920 can be executed by the receiving module 310, the Step S930, S940, and S950 can be executed by the selecting module 340, and the Step S960 can be executed by the transmitting module 320.

What calls for special attention is that: the steps shown in FIG.8 can be applied to a client (e.g., the client 100 shown in FIG.2), while the steps shown in FIG.9 can be applied to a server (e.g., the server 300 shown in FIG.3), wherein the steps shown in FIG.8 should cooperate with the steps shown in FIG.9.

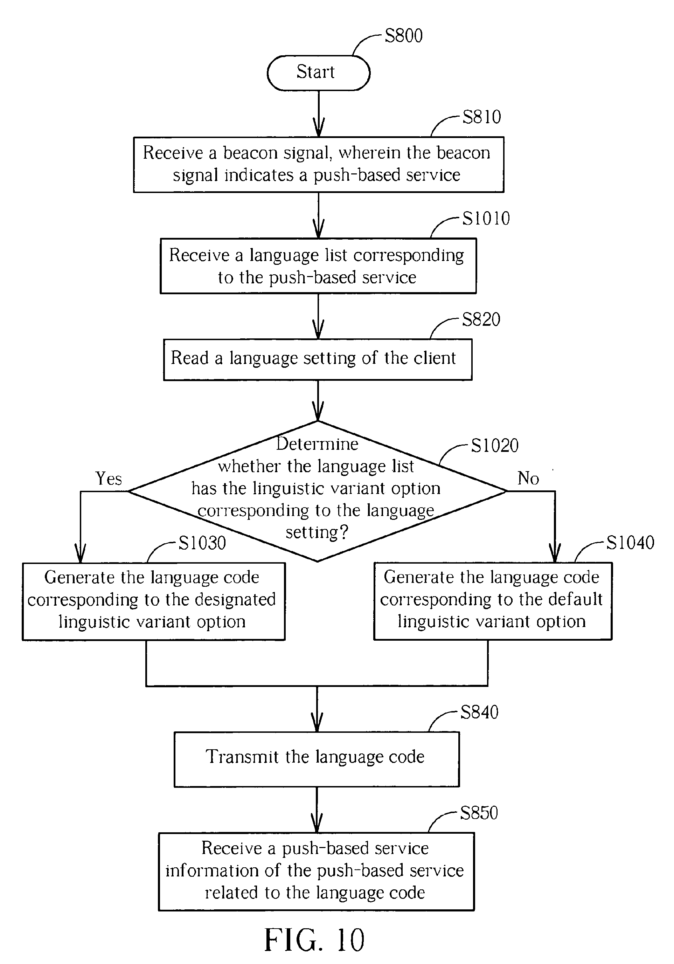

Please refer to FIG.10. FIG.10 is a flowchart illustrating a method for automatically setting language types of push-based services according to still another exemplary embodiment of the present invention. The method includes, but is not limited to, the following steps:

Step S800: Start.

Step S810: Receive a beacon signal, wherein the beacon signal indicates a push-based service.

Step S1010: Receive a language list corresponding to the push-based service, wherein the language list includes a plurality of linguistic variant options corresponding to the push-based service and the plurality of linguistic variant options include a default linguistic variant option.

Step S820: Read a language setting of the client.

Step S1020: Determine whether the language list has the linguistic variant option corresponding to the language setting according to the language setting of the client. When determining that the language list has a designated linguistic variant option corresponding to the language setting, go to step S1030; otherwise, go to step S1040.

Step S1030: Generate the language code corresponding to the designated linguistic variant option.

Step S1040: Generate the language code corresponding to the default linguistic variant option.

Step S840: Transmit the language code.

Step S850: Receive a push-based service information of the push-based service related to the language code.

Please note that the steps shown in FIG.10 are similar to the steps shown FIG.8, which is a varied embodiment of FIG.8. The difference between them is that: FIG.10 further includes the step S1010, and the step S830 shown in FIG. 8 is replaced by the steps S1020, S1030, and S1040 shown in FIG.10. How each element operates can be known by collocating the steps shown in FIG.10 together with the elements of the client 500 shown in FIG. 5 and the flow shown in FIG. 7. Therefore, further description for the operations of the steps shown in FIG.10 is omitted here for brevity. Herein the step S1010 can be executed by the receiving module 510, and the steps S1020, S1030, and S1040 can be executed by the language code generating module 530.

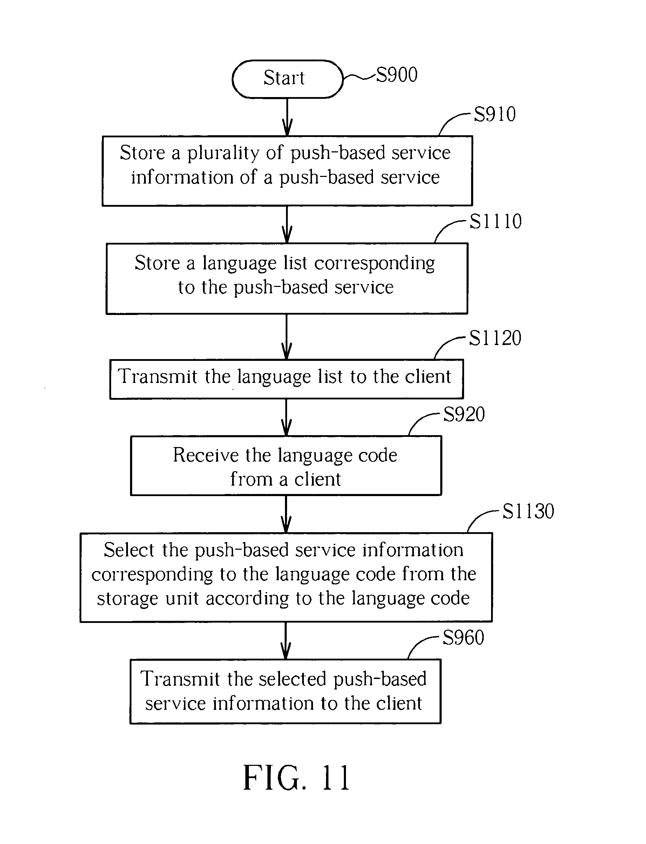

Please refer to FIG.11. FIG.11 is a flowchart illustrating a method for automatically setting language types of push-based services according to still another exemplary embodiment of the present invention. The method includes, but is not limited to, the following steps:

Step S900: Start.

Step S910: Store a plurality of push-based service information of a push-based service.

Step S1110: Store a language list corresponding to the push-based service.

Step S1120: Transmit the language list to the client.

Step S920: Receive the language code from a client.

Step S1130: Select the push-based service information corresponding to the language code from the storage unit according to the language code.

Step S960: Transmit the selected push-based service information to the client.

Please note that the steps shown in FIG.11 are similar to the steps shown FIG.9, which is a varied embodiment of FIG.9. The difference between them is that: FIG.11 further includes the steps S1110 and S1120, and the step S930, S940, and S950 shown in FIG.9 are replaced by the step S1130 shown in FIG.11. How each element operates can be known by collocating the steps shown in FIG. 11 together with the elements of the server 600 shown in FIG.6 and the flow shown in FIG.7. Therefore, further description for the operations of the steps shown in FIG.11 is omitted here for brevity. Herein the step S1110 can be executed by the storage unit 610, the step S1120 can be executed by the transmitting module 620, and the step S1130 can be executed by the selecting module 640.

What calls for special attention is that: the steps shown in FIG.10 can be applied to a client (e.g., the client 500 shown in FIG.5), while the steps shown in FIG.11 can be applied to a server (e.g., the server 600 shown in FIG.6), wherein the steps shown in FIG.10 should cooperate with the steps shown in FIG.11.

Please note that, the steps of the abovementioned flowcharts are merely practicable embodiments of the present invention, and in no way should be considered to be limitations of the scope of the present invention. These methods can include other intermediate steps or several steps can be merged into a single step without departing from the spirit of the present invention.

The abovementioned embodiments are presented merely for describing the features of the present invention, and in no way should be considered to be limitations of the scope of the present invention. In summary, the present invention provides methods for automatically setting language types of push-based services, clients, and servers. This mechanism is especially suitable for a condition that a user is unable or inconvenient to select the desired language of the push-based services in advance, such that the system is able to automatically help the user to select the appropriate language of the push-based services and transmit the push-based service information corresponding to the selected language to the client. In other words, by adopting the methods and devices disclosed in the present invention, the client is able to automatically set language types of push-based services without pre-selecting the desired language by the user, so as to bring more convenience to the user.

Those skilled in the art will readily observe that numerous modifications and alterations of the device and method may be made while retaining the teachings of the invention, the invention is defined by the claims.

## Claims

1. A method, applied to a client, for automatically setting language types of push-based services, the method comprising the following steps:
receiving a beacon signal (S810), wherein the beacon signal indicates a push-based service;
reading a language setting of the client (S820);
generating a language code (S830)according to the language setting;
transmitting the language code (S840); and
receiving a push-based service information (s850) of the push-based service related to the language code,
wherein the step of generating the language code according to the language setting comprises:
receiving a language list corresponding to the push-based service, wherein the language list comprises a plurality of linguistic variant options corresponding to the push-based service; and generating the language code according to the language setting of the client and the language list.

2. The method of claim 1, wherein the step of generating the language code according to the language setting of the client and the language list comprises:
determining whether the language list has the linguistic variant option corresponding to the language setting according to the language setting of the client; and
when determining that the language list has the linguistic variant option corresponding to the language setting, generating the language code corresponding to the language setting.

3. The method of claim 1 or 2, wherein the plurality of linguistic variant options comprises a default linguistic variant option, and the step of generating the language code according to the language setting of the client and the language list comprises:
determining whether the language list has the linguistic variant option corresponding to the language setting according to the language setting of the client; and
when determining that the language list does not have the linguistic variant option corresponding to the language setting, generating the language code corresponding to the default linguistic variant option.

4. A client (500) for automatically setting language types of push-based services, comprising:
a receiving module (510), for receiving a beacon signal, wherein the beacon signal indicates a push-based service;
a language setting reading module (120), for reading a language setting of the client;
a language code generating module (530), for generating a language code according to the language setting; and
a transmitting module(140), for transmitting the language code;
wherein the receiving module is further used for receiving a push-based service information of the push-based service related to the language code,
wherein:
the receiving module is further used for receiving a language list corresponding to the push-based service, wherein the language list comprises a plurality of linguistic variant options corresponding to the push-based service; and
the language code generating module generates the language code according to the language setting of the client and the language list.

5. The client of claim 4, wherein the language code generating module first determines whether the language list has the linguistic variant option corresponding to the language setting according to the language setting of the client, and then generates the language code corresponding to the language setting when determining that the language list has the linguistic variant option corresponding to the language setting.

6. The client of claim 4, wherein the plurality of linguistic variant options comprises a default linguistic variant option; and the language code generating module first determines whether the language list has the linguistic variant option corresponding to the language setting according to the language setting of the client, and then generates the language code corresponding to the default linguistic variant option when determining that the language list does not have the linguistic variant option corresponding to the language setting.

7. The client of one or more of the claims 4 to 6, wherein the language code conforms to one of a universal resource locator (URL) definition, an ISO 639 language coding definition, and a Unicode definition.

8. The client of one or more of the claims 4 to 7, wherein the push-based service conforms to one of an 802.11u protocol, a short message service (SMS) protocol, and a wireless application protocol (WAP).

9. A method, applied to a server, for automatically setting language types of push-based services, the method comprising the following steps:
storing a plurality of push-based service information (S910) of
a push-based service, wherein the plurality of push-based service information correspond to a plurality of languages, respectively;
receiving a language code (S920) from a client;
selecting one of the plurality of push-based service information (S940) according to the language code; and
transmitting the selected push-based service information (S960) to the client,
further comprising:
transmitting a language list corresponding to the push-based
service, wherein the language list comprises a plurality of linguistic variant options corresponding to the push-based service; and
the step of selecting one of the plurality of push-based service
information according to the language code comprises:
selecting the push-based service information corresponding to the
language code.

10. A server (300), comprising:
a storage unit (310), for storing a plurality of push-based service
information of a push-based service, wherein the plurality of push-based service information correspond to a plurality of languages, respectively;
a receiving module (330), for receiving a language code from a
client;
a selecting module (340, for selecting one of the plurality of
push-based service information according to the language code; and
a transmitting module (320), for transmitting the selected
push-based service information to the client,
wherein:
the transmitting module is further used for transmitting a
language list corresponding to the push-based service, wherein the language list comprises a plurality of linguistic variant options corresponding to the push-based service; and
the selecting module selects the push-based service information
corresponding to the language code.

## Patentansprüche

1. Verfahren, das auf einem Client zum automatischen Einstellen von Spracharten von Push basierten Diensten angewendet wird, wobei das Verfahren die folgenden Schritte umfasst:
Empfangen eines Beacon-Signals (S810), wobei das Beacon-Signal ein Push-Service anzelgt ;
Lesen einer Spracheinstellung des Clients (S820);
Erzeugen eines Sprachcodes (S830) nach der Spracheinstellung;
Übertragung des Sprach-Codes (S840) und
Empfangen einer Push basierten Service-Information (S850) des push basierten Diensten, im Zusammenhang mit dem Sprach-Code,
wobei der Schritt des Erzeugens des Sprachcodes entsprechend der Spracheinstellung umfasst:
Empfangen einer Liste der Sprachen, entsprechend des Push basierten Diensten,
wobei die Liste der Sprachen eine Vielzahl von sprachlichen Variantenoptionen, die zu push basierten Diensten korrespondieren, umfasst und
Erzeugen des Sprach-Codes, entsprechend der Spracheinstellungen des Clients und der Liste der Sprachen.

2. Verfahren nach Anspruch 1, wobei der Schritt des Erzeugens des Sprachcodes entsprechend der Sprache des Clients und der Liste der Sprachen aufweist:
Feststellen, ob die Liste der Sprachen eine sprachlichen Variantenoptionen der Sprachelnstellung entsprechend der Spracheeinstellung des Clients aufweist, und
wenn festgestellt wurde, dass die Liste der Sprachen die sprachliche Variantenoption entsprechend der Spracheinstellung aufweist, generieren des Sprach-Codes korrespondierend zu der Spracheinstellung.

3. Verfahren nach Anspruch 1 oder 2, wobei die Mehrzahl der sprachlichen Variantenoptionen eine sprachliche Default-Variantenoption umfasst, und der Schritt der Erzeugung des Sprache-Codes entsprechend der Sprache des Clients und der Liste der Sprachen umfasst:
Feststellen, ob die Liste der Sprachen eine sprachlichen Variantenoption entsprechend der Spracheinstellung nach der Sprache des Clients aufweist, und
wenn festgestellt wurde, dass die Liste der Sprachen keine sprachliche Variantenoption entsprechend der Spracheinstellung aufweist, , generieren des Sprach-Codes entsprechend der sprachlichen Default-Variantenoption.

4. Ein Client (500) zum automatischen Einstellen von Spracharten von Push basierten Diensten umfassend:
ein Empfangsmodul (510) zum Empfangen eines Beacon-Signals, wobei das Beacan-Signal einen Push basierten Dienst anzeigt;
eine Sprach-Einstellungs-Lesemodul (120), zum Lesen einer Sprecheinstellung des Client;
ein Sprachcode-Erzeugungsmodul (530), zum Erzeugen eines Sprach-Codes gemäß der Spracheinstellung und
ein Sendemodul (140) zum Übertragen des Sprach-Codes wobei das Empfangsmodul ferner zum Empfangen einer Push basierten Dienst-Information des Push basierten Dienstes verwendet wird, das im Zusammenhang mit dem Sprachcode steht,
wobei:
das Empfangsmodul ferner zum Empfangen einer Liste der Sprachen, die für den Push basierten Dienst benötigt wird, benutzt wird, wobei die Sprach-Liste eine Vielzahl von linguistischen Variantenoptionen entsprechend des Push basierten Dienstes verwendet, und
das Sprach-Code erzeugende Modul erzeugt den Sprach-Code entsprechend der Sprache des Clients und der Liste der Sprachen.

5. Der Client gemäß Anspruch 4, wobei das Sprach-Code erzeugende Modul zuerst feststellt, ob die Sprach-Liste die
sprachliche Variantenoption korrespondierend zu der Spracheinstellung hat, gemäß der Sprache des Clients, und erzeugt dann
den Sprach-Code entsprechend der Spracheinstellung, wenn festgestellt wurde, dass die Liste der Sprachen die sprachliche Variantenoption entsprechend der Spracheinstellung aufweist.

6. Der Client gemäß Anspruch 4, wobei die Vielzahl von linguistischen Variantenoptionen eine sprachliche Default Variantenoption umfasst; und das Sprach-Code erzeugenden Modul zunächst feststellt, ob die Sprach-Liste die sprachliche Variantenoption korrespondierend zu der Spracheinstellung gemäß der Spracheeinstellung des Clients aufweist und erzeugt dann den Sprachcode entsprechend der sprachlichen Default Variantenoption, wenn festgestellt wird, dass die Sprach-Liste nicht die sprachliche Variantenoption korrespondierend zu der Spracheinstellung aufweist.

7. Der Client von einem oder mehreren der Ansprüche, wobei der Sprach-Code einer Universal Resource Locator (URL) Definition entspricht, einer ISO 639 Sprach-Codierungs-Definition und einer Unicode-Definition,

8. Der Client von einem oder mehreren der Ansprüche, wobei der Push basierte Dienst einem 802.11u Protokoll entspricht, einem Kurznachrichtendienst-(SMS)-Protokoll, und eine Wireless-Applikation-Protocol (WAP).

9. Ein Verfahren, angewandt auf einem Server, für ein automatisches Einstellen von Spracharten von Push basierten Diensten, wobei das Verfahren die folgenden Schritte umfasst:
Speichern einer Vielzahl von Push-Service-Informatlonen (S910) eines Push basierten Dienstes,
wobei die Vielzahl von Push-Service-Informationen einer Vielzahl von Sprachen entspricht;
Empfangen eines Sprach-Codes (S920) von einem Client;
Auswählen eines der Vielzahl von Push-Service-Informationen (S940) gemäß dem Sprachcode und
Übertragen der ausgewählten Push-Service-Informationen (S960) an den Client,
ferner umfassend:
Übertragen einer Sprach-Liste entsprechend des Push basierten Dienstes, wobei die Sprach-Liste eine Vielzahl von sprachlichen Variantenoptionen korrespondierend zu dem Push basierten Dienstes aufweist, und
der Schritt des Auswählens einer der Vielzahl von Push-Service-Informationen entsprechend dem Sprachcode umfasst:
auswählen des Push-Service-Information entsprechend des Sprach-Codes.

10. Ein Server (300), umfassend:
eine Speichereinheit (310) zum Speichern einer Vielzahl von Push-Service-Informationen von einem Push basierten Dienst, wobei die Vielzahl der Push basierten Dienste jeweils einer Vielzahl von Sprachen entspricht;
ein Empfangsmodul (330) zum Empfangen eines Sprach-Codes von einem Client;
ein Auswahlmodul (340, zum Auswählen einer der Vielzahl von Push-Service-Informationen entsprechend dem Sprachcode;
und
ein Sendemodul (320) zum Übertragen des ausgewählten Push basierten Dienstes an den Client,
wobei:
das Sendemodul ferner zum Übertragen einer Sprach-Liste entsprechend der Push basierten Dienste verwendet wird, wobei
die Sprach-Liste eine Vielzahl von sprachlichen Varianten entsprechend der Push basierten Dienste aufweist, und
das Auswahlmodul wählt die Push-Service-Information entsprechend dem Sprachcode.

## Revendications

1. Une méthode, appliquée à un client, pour le paramétrage automatique de langues de services à base de poussoir, la méthode comportant les étapes suivantes :
la réception d'un signal de balise (S810), dans laquelle le signal de balise indique un service à base de poussoir ;
la lecture d'un paramétrage linguistique du client (S820) ;
la génération d'un code linguistique (S830) dépendant du paramétrage linguistique ;
la transmission du code linguistique (S840) ; et
la réception d'une information de service à base de poussoir (S850) du service à base de poussoir relatif au code linguistique,
dans laquelle l'étape de génération d'un code linguistique dépendant du paramétrage linguistique comporte :
la réception d'une liste de langue correspondant au service à base de poussoir, dans laquelle la liste de langue comporte une pluralité d'options de variantes linguistiques correspondant au service à base de poussoir ; et
la génération du code linguistique dépendant du paramétrage linguistique du client et la liste de langue.

2. La méthode de la revendication1, dans laquelle l'étape de génération du code linguistique dépendant du paramétrage linguistique et la liste de langues comportent :
la détermination du fait de savoir si la liste de langue présente une option de variantes linguistiques correspondant au paramétrage linguistique dépendant du paramétrage de langue du client ; et
lorsque la liste de langue présente une option de variantes linguistiques correspondant au paramétrage linguistiques dépendant du paramétrage linguistique du client, la génération du code linguistique correspondant au paramétrage de langue.

3. La méthode de la revendication 1 ou 2, dans laquelle la pluralité d'options de variantes linguistiques comporte une option de variantes linguistiques par défaut, et l'étape de génération du code linguistique dépendant du paramétrage linguistique du client et la liste de langues comportent :
la détermination du fait de savoir si la liste de langue présente une option de variante linguistique correspondant au paramétrage linguistique dépendant du paramétrage linguistique du client; et
lorsque la détermination établit que la liste de langue ne présente pas une option de variante linguistique correspondant au paramétrage linguistique, la génération d'un code linguistique correspondant à l'option de variante linguistique par défaut.

4. Un client (500) pour le paramétrage linguistique automatique de services à base de poussoir, comprenant :
un module de réception (510), pour la réception d'un signal de balise, dans lequel le signal de balise indique un service à base de poussoir ;
un module de lecture de paramétrage linguistique (120), pour la lecture d'un paramétrage linguistique du client ;
un module de génération de code linguistique (530), pour la génération d'un code linguistique dépendant du paramétrage linguistique ; et
un module de transmission (140), pour la transmission du code linguistique ;
lorsque le module de réception est utilisé en outre pour la réception d'une information de service à base de poussoir du service à base de poussoir relatif au code linguistique,
dans lequel
le module de réception est en outre utilisé pour la réception d'une liste de langue correspondant au service à base de poussoir, dans lequel la liste de langue comporte une pluralité d'option de variantes linguistiques correspondant au service à base de poussoir ; et
le module de génération de code linguistique génère le code linguistique dépendant du paramétrage linguistique du client et de la liste de langue.

5. Le client de la revendication 4, dans lequel le module de génération de code linguistique détermine en premier lieu si la liste de langues présente une option de variantes linguistiques correspondant au paramétrage linguistique dépendant du paramétrage linguistique du client, et génère ensuite le code linguistique correspondant au paramétrage linguistique lors qu'il détermine que la liste de langue présente une option de variantes linguistiques correspondant au paramétrage linguistique.

6. Le client de la revendication 4, dans lequel la pluralité d'options de variantes linguistiques comporte une option de variante linguistique par défaut, et le module de génération de code linguistique détermine en premier lieu si la liste de langue présente une option de variantes linguistiques correspondant au paramétrage linguistique dépendant du paramétrage linguistique du client, et génère ensuite le code linguistique correspondant à l'option de variante linguistique par défaut lorsqu'il détermine que la liste de langues ne présente pas l'option de variantes linguistiques correspondant au paramétrage linguistique.

7. Le client de l'une ou de plusieurs des revendications 4 à 6, dans lequel le code linguistique se conforme à une des définition de lien de ressource universelle (URL), une définition de code linguistique ISO639, une définition UNICODE.

8. Le client de l'une ou de plusieurs des revendications 4 à 7, dans lequel le service à base de poussoir se conforme à l'un des protocoles 802,11u, un protocole de service de message court (SMS), et un protocole d'application sans fil (WAP).

9. Une méthode, appliquée à un serveur, pour automatiquement paramétrer des services linguistiques à base de poussoir, la méthode comprenant les étapes suivantes :
le stockage de plusieurs informations de service à base de poussoir (S910) d'un service à base de poussoir, dans laquelle les informations de service à base de poussoir correspondent à une pluralité de langues, respectivement ;
la réception d'un code linguistique (S920) d'un client ;
la sélection de l'une des informations de services à base de poussoir (S940) dépendant d'un code linguistique ; et
la transmission de l'information de service à base de poussoir sélectionné (S960) au client ;
comprenant en outre :
la transmission d'une liste de langue correspondant au service à base de poussoir, dans laquelle la liste de langue comporte une pluralité d'options de variantes linguistiques correspondant au service à base de poussoir ; et
l'étape de sélection de l'une des informations de service à base de poussoir en fonction du code linguistique comporte :
la sélection d'une information de service à base de poussoir correspondant au code linguistique.

10. Un serveur (300), comprenant :
une unité de stockage (310), pour le stockage d'une pluralité d'informations de service à base de poussoir, dans lequel la pluralité d'informations de service à base de poussoir correspond à une pluralité de langues , respectivement ;
un module de réception (330), pour la réception d'un code linguistique d'un client ;
un module de sélection (340), pour la sélection de l'une des informations de service à base de poussoir dépendant du code linguistique ; et
un module de transmission (320), pour la transmission au client de l'information sélectionnée de service à base de poussoir,
dans lequel :
le module de transmission est en outre utilisé pour la transmission d'une liste de langue correspondant au service à base de poussoir, dans lequel la liste de langue comporte une pluralité d'options de variantes linguistiques correspondant au service à base de poussoir ; et
le module de sélection sélectionne l'information de service à base de poussoir correspondant au code linguistique.
